# EUROPEAN PATENT SPECIFICATION

(11) **EP 3 621 230 B1**
(45) Date of publication and mention of the grant of the patent: **19.03.2025**
(21) Application number: 17908108.8
(22) Date of filing: 02.05.2017
(51) Int. Cl.: H04L 1/16, H04L 1/18

(54) **USER TERMINAL, AND WIRELESS COMMUNICATION METHOD**
BENUTZERENDGERÄT UND DRAHTLOSKOMMUNIKATIONSVERFAHREN
TERMINAL D'UTILISATEUR ET PROCÉDÉ DE COMMUNICATION SANS FIL

(43) Date of publication of application: 11.03.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/017305
(87) International publication number: WO 2018/203406

(56) References cited:
- EP-A1- 3 609 226
- SAMSUNG: "CB-group based retransmission for eMBB", vol. RAN WG1, no. Athens, Greece; 20170213 - 20170217, 12 February 2017 (2017-02-12), XP051210132, Retrieved from the Internet <URL:http://www.3gpp.org/ftp/Meetings_3GPP_SYNC/RAN1/Docs/> [retrieved on 20170212]
- CATT: "Discussion on NR HARQ-ACK feedback mechanisms", vol. RAN WG1, no. Spokane, USA; 20170403 - 20170407, 2 April 2017 (2017-04-02), XP051242722, Retrieved from the Internet <URL:http://www.3gpp.org/ftp/Meetings_3GPP_SYNC/RAN1/Docs/> [retrieved on 20170402]
- SAMSUNG: "Overview of CBG-based retransmission in NR", 3GPP TSG RAN WG1#88BIS R1-1705401, 24 March 2017 (2017-03-24), pages 1 - 4, XP051250686, Retrieved from the Internet <URL:http://www.3gpp.org/ftp/tsg_ran/WG1_RL1/TSGR1_88b/Docs/R1-1705401.zip>
- SAMSUNG: "CB-group based retransmission for eMBB", 3GPP TSG RAN WG1#88 R1-1702990, February 2017 (2017-02-01), pages 1 - 9, XP051221790, Retrieved from the Internet <URL:http://www.3gpp.org/ftp/tsg-ran/WG1-RL1/TSGR1-88/Docs/R1-1702990.zip>
- NTT DOCOMO,INC.: "On DL dynamic multiplexing of eMBB and URLLC", 3GPP TSG RAN WG1#88BIS R1-1705753, 25 March 2017 (2017-03-25), pages 1 - 4, XP051252168, Retrieved from the Internet <URL:http://www.3gpp.org/ftp/tsg_ran/WG1_RL1/TSGR1_88b/Docs/R1-1705753.zip>
- HUAWEI, HISILICON: "Discussion on CBG-based feedback and retransmission", 3GPP TSG RAN WG1#88BIS R1-1705066, 25 March 2017 (2017-03-25), pages 1 - 4, XP051251724, Retrieved from the Internet <URL:www.3gpp.org/ftp/tsg_ran/WG1_RL1/TSGR1_88b/Docs/R1-1705066.zip>

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). Also, the specifications of LTE-A (also referred to as "LTE-Advanced," "LTE Rel. 10 to 13," etc.) have been drafted for further broadbandization and increased speed beyond LTE (also referred to as "LTE Rel. 8 or 9"), and successor systems of LTE (also referred to as, for example, "FRA (Future Radio Access)," "5G (5th Generation mobile communication system)," "NR (New RAT (Radio Access Technology)," "LTE Rel. 14 and later versions," etc.) are under study.

In existing LTE systems (for example, Rel. 13 and earlier versions), adaptive modulation coding (AMC), which adaptively changes at least one of the modulation schemes, the transport block size (TBS), and the coding rate, is executed for link adaptation. Here, the TBS is the size of transport blocks (TBs), which are units of information bit sequences. One or more TBs are assigned to 1 subframe.

Also, in existing LTE systems, when TBS exceeds a predetermined threshold (for example, 6144 bits), a TB is divided into one or more segments (codeblocks (CBs)), and coding is done on a per segment basis (codeblock segmentation). Each encoded codeblock is concatenated and transmitted.

Also, in existing LTE systems, retransmission (HARQ (Hybrid Automatic Repeat reQuest)) of DL signals and/or UL signals is controlled in TB units. To be more specific, in existing LTE systems, even when a TB is segmented into a plurality of CBs, retransmission control information ("ACK (ACKnowledgment)" or "NACK (Negative ACK)" (hereinafter abbreviated as "A/N" and also referred to as "HARQ-ACK" and the like) is transmitted in TB units.

Non-Patent Literature 2 describes CB-group based retransmission for eMBB. It is proposed that NR support CBG-based HARQ-ACK feedback.

Non-Patent Literature 3 describes NR HARQ-ACK feedback mechanisms.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010
Non-Patent Literature 2: SAMSUNG: "CB-group based retransmission for eMBB", 3GPP DRAFT; R1-1702990
Non-Patent Literature 3: CATT: "Discussion on NR HARQ-ACK feedback mechanisms", 3GPP DRAFT; R1-1704583

### Summary of Invention

### Technical Problem

Envisaging future radio communication systems (for example, 5G, NR, etc.), for example, it is predictable that larger TBS will be used in order to support communication of higher speed and larger capacity (EMBB (enhanced Mobile Broad Band)) than in existing LTE systems. TBs of such large TBS are likely to be segmented into many CBs compared to existing LTE systems (for example, 1 TB may be segmented into tens of CBs).

Envisaging such future radio communication systems, studies are in progress to support transmission (or retransmission) control based on groups (code block groups (CBGs)), each comprised of one or more CBs, in addition to providing support for TB-based transmission control. Therefore, signaling for controlling TB-based and/or CBG-based transmission (including retransmission) and/or receipt is needed.

The present invention has been made in view of the above, and it is therefore an object of the present invention to provide a user terminal and a radio communication method, whereby TB-based and/or CBG-based transmission (including retransmission) and/or receipt can be controlled properly.

### Solution to Problem

This object is accomplished by the subject-matter of the independent claims. The dependent claims concern particular embodiments.

### Advantageous Effects of Invention

According to the present invention, TB-based and/or CBG-based transmission (including retransmission) and/or receipt can be controlled properly.

### Brief Description of Drawings

FIG. 1 is a diagram to show an example of transmission process where codeblock segmentation is employed;
FIG. 2 is a diagram to show an example of receiving process where codeblock segmentation is employed;
FIG. 3 is a diagram to show an example of DL retransmission control in an existing LTE system;
FIG. 4 is a diagram to show an example of initial transmission and retransmission according to the first example of the present invention;
FIG. 5 is a diagram to show another example of initial transmission and retransmission according to the first example;
FIG. 6 is a diagram to show an example of initial transmission and retransmission according to a second example of the present invention;
FIG. 7 is a diagram to show another example of initial transmission and retransmission according to the second example;
FIG. 8 is a diagram to show an example of a predetermined field showing the cause of retransmission of CBG according to a third example of the present invention;
FIGs. 9A and 9B are diagrams to show other examples of a predetermined field showing the cause of retransmission of CBG according to the third example;
FIGs. 10A and 10B are diagrams to show examples of scheduling of retransmitting CBGs, according to the third example;
FIGs. 11A and 11B are diagrams to show other examples of scheduling of retransmitting CBGs according to the third example;
FIG. 12 is a diagram to show an exemplary schematic structure of a radio communication system according to the present embodiment;
FIG. 13 is a diagram to show an exemplary overall structure of a radio base station according to the present embodiment;
FIG. 14 is a diagram to show an exemplary functional structure of a radio base station according to the present embodiment;
FIG. 15 is a diagram to show an exemplary overall structure of a user terminal according to the present embodiment;
FIG. 16 is a diagram to show an exemplary functional structure of a user terminal according to the present embodiment; and
FIG. 17 is a diagram to show exemplary hardware structure of a radio base station and a user terminal according to the present embodiment.

### Description of Embodiments

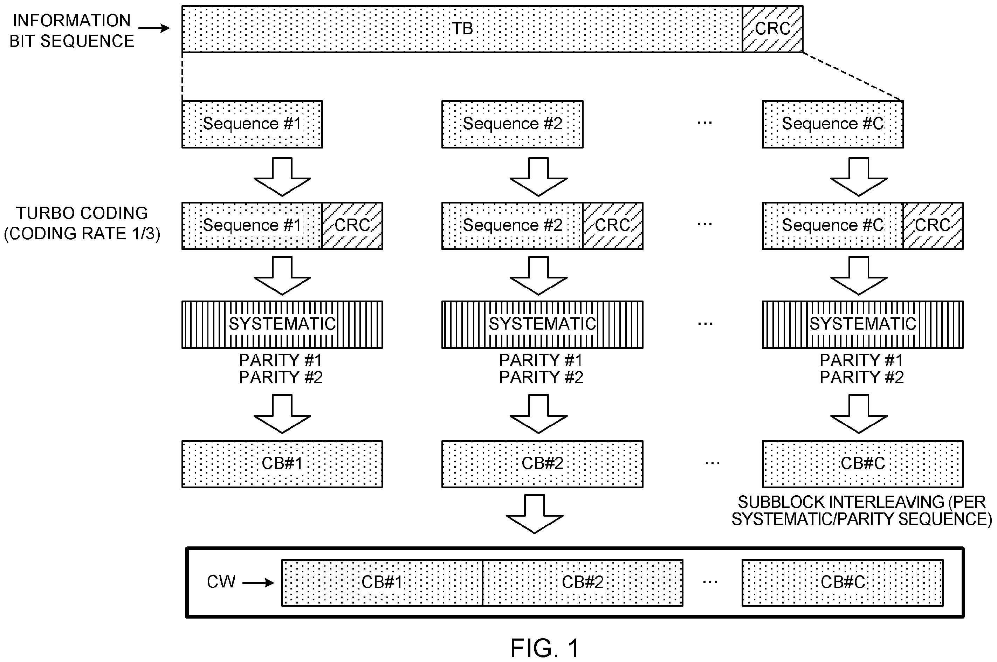

FIG. 1 is a diagram to show an example of transmission process where codeblock segmentation is employed. When a transport block (hereinafter abbreviated as a "TB"), to which CRC (Cyclic Redundancy Check) bits are attached (that is, an information bit sequence including CRC bits), exceeds a predetermined threshold (for example, 6144 bits or 8192 bits, etc.), codeblock segmentation refers to dividing this TB into a plurality of segments. Codeblock segmentation is executed, for example, to adjust the TBS to a size that is compatible with the encoder, and the above predetermined threshold may be equal to the maximum size that is compatible with the encoder.

As shown in FIG. 1, when the TB size (TBS) exceeds a predetermined threshold (for example, 6144 bits or 8192 bits, etc.), this information bit sequence, including CRC bits, is divided (segmented) into a plurality of segments on the transmitting side. Note that filler bits may be appended to the top of segment #1.

As shown in FIG. 1, each segment is attached CRC bits (for example, 24 bits), and subjected to channel coding (for example, turbo coding, low-density parity-check (LDPC) coding, etc.) at a predetermined coding rate (for example, 1/3, 1/4, 1/8, etc.). By means of this channel coding, systematic bits and parity bits (first and second parity bits (#1 and #2)) are generated as code bits of each codeblock (hereinafter abbreviated as "CB").

Each CB is interleaved in a predetermined manner, has a bit sequence of an amount to match the amount of scheduled resources selected, and transmitted. For example, the systematic bit sequence, the first parity bit sequence and the second parity bit sequence are all interleaved individually (subblock interleaving). After this, the systematic bit sequence, the first parity bit sequence and the second parity bit sequence are each input to a buffer (circular buffer), and, based on the number of REs that are available in allocated resource blocks, the redundancy version (RV) and so on code bits for each CB are selected from the buffer (rate matching). Interleaving may be applied between multiple CBs as well.

Each CB, comprised of selected code bits, is concatenated to form a codeword (CW). The codeword is subjected to scrambling, data modulation and so on, and then transmitted.

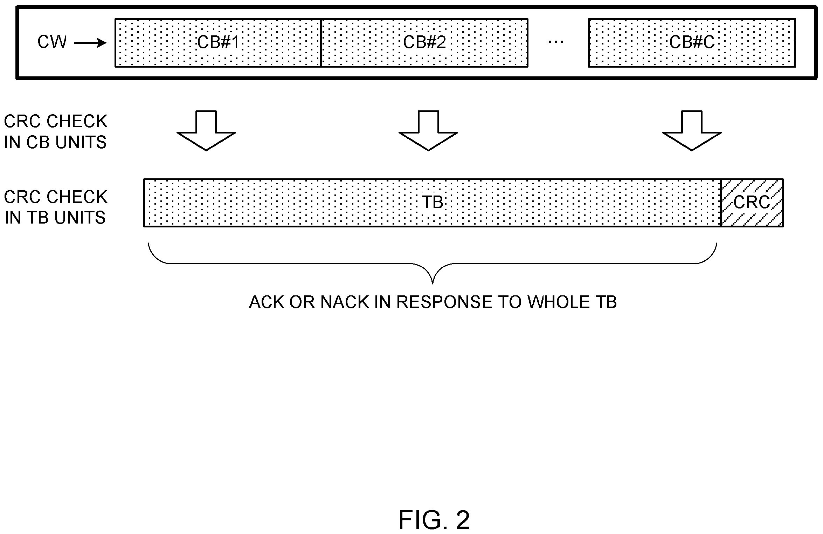

FIG. 2 is a diagram to show an example of receiving process where codeblock segmentation is employed. On the receiving side, the TBS is determined based on the TBS index and the number of resource blocks allocated (for example, PRBs (Physical Resource Block)), and, based on the TBS, the number of CBs is determined.

As shown in FIG. 2, on the receiving side, each CB is decoded, and error detection of each CB is performed using the CRC bits appended to each CB. Also, codeblock segmentation is undone, so as to recover the TB. Furthermore, error detection of the whole TB is performed using the CRC bits appended to the TB.

At the receiving side in existing LTE systems, retransmission control information (which is also referred to as "ACK" or "NACK," and which hereinafter will be abbreviated as "A/N" or referred to as "HARQ-ACK") in response to the whole of the TB is transmitted to the transmitting side, based on the error detection result of the whole TB. On the transmitting side, the whole TB is retransmitted in response to a NACK from the receiving side.

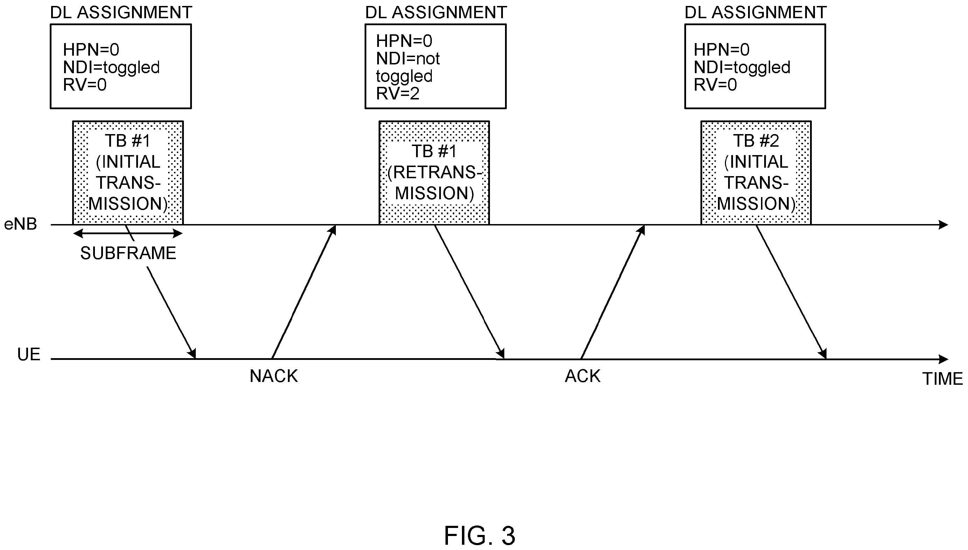

FIG. 3 is a diagram to show an example of retransmission control for DL signals in an existing LTE system. In existing LTE systems, retransmission control is executed on per a TB basis, irrespective of whether or not a TB is divided into a plurality of CBs. To be more specific, HARQ processes are assigned on a per TB basis. Here, HARQ processes are processing units in retransmission control, and every HARQ process is identified by a HARQ process number (HPN). One or more HARQ processes are configured in a user terminal (UE (User Equipment)), and, in the HARQ process of the same HPN, the same data keeps being retransmitted until an ACK is received.

For example, referring to FIG. 3, HPN=0 is assigned to TB #1 for initial transmission. Upon receiving a NACK, the radio base station (eNB (eNodeB)) retransmits same TB #1 in HPN=0, and, upon receiving an ACK, the radio base station transmits next TB #2, for the first time, in HPN=0.

Also, in downlink control information (DCI) (DL assignment) that allocates the DL signal (for example, a PDSCH) for transmitting TBs, the radio base station can include the above HPN, a new data indicator (NDI) and a redundancy version (RV).

Here, the NDI is an indicator to distinguish between initial transmission and retransmission. For example, the NDI indicates retransmission if the NDI is not toggled in the same HPN (has the same value as the previous value), and indicates initial transmission if the NDI is toggled (has a different value from the previous value).

In addition, the RV indicates the difference in the redundancy of transmission data. The values of RVs include, for example, 0, 1, 2 and 3, where 0 indicates the lowest degree of redundancy, and is used for initial transmission. By applying a different RV value to every transmission with the same HPN, HARQ gain can be achieved effectively.

For example, in FIG. 3, the DCI in TB #1 of initial transmission contains the HPN "0," a toggled NDI, and the RV value "0." Therefore, the user terminal can recognize that the HPN "0" indicates initial transmission, and decodes TB #1 based on the RV value "0." On the other hand, the DCI in the retransmission of TB #1 includes the HPN "0," an untoggled NDI, and the RV value "2." Therefore, the user terminal can recognize that the HPN "0" indicates retransmission, and decodes TB #1 based on the RV value "2." The initial transmission of TB #2 is the same as the initial transmission of TB #1.

As described above, in existing LTE systems, retransmission control is executed on a per TB basis, regardless of whether or not codeblock segmentation is employed. For this reason, when codeblock segmentation is employed, if errors concentrate in a portion of C (C>1) CBs that are formed by dividing a TB, the whole TB is retransmitted.

Therefore, not only CBs in which errors are detected (and which therefore fail to be decoded), but also CBs in which errors are not detected (successfully decoded) have to be retransmitted, which might cause a decline in performance (throughput). Future radio communication systems (for example, 5G, NR, etc.) are anticipated to have increased cases where a TB is segmented into many CBs (for example, tens of CBs), and where the decline in performance is significant when retransmission is controlled in units of TBs.

Envisaging such future radio communication systems, studies are in progress to support transmission (or retransmission) control based on codeblock groups (CBGs), each comprised of one or more CBs, in addition to providing support for TB-based transmission (or retransmission) control. Therefore, signaling for controlling TB-based and/or CBG-based transmission (including retransmission) and/or receipt properly is needed.

Therefore, the present inventors worked on a method for controlling TB-based and/or CBG-based transmission (including retransmission) and/or receipt properly, and arrived at the present invention. To be more specific, the present inventors have come up with the ideas of controlling DCI format between initial transmission and retransmission (the first example), controlling DCI format between TBs and CBGs (the second example), controlling decoding of retransmitting CBGs based on the cause of retransmission of CBGs (the third example), and controlling the fallback from CBG-based control to TB-based control (the fourth example).

Now, embodiments of the present invention will be described below in detail with reference to the accompanying drawings. In the following present embodiment, initial transmission is performed based on TBs, but it may be performed based on CBGs as well. Retransmission is likely to be performed based on CBGs or may be performed based on TBs.

### (First Example)

In the first example of the present invention, control of DCI format (DCI) at the time of initial transmission and retransmission will be described. In the first example, different DCI formats may be used for initial transmission and retransmission, or the same (single) DCI format may be used.

In the first example, a user terminal configures CBG-based retransmission a predetermined period x (for example, x=1, 2, 3, 4 ... (slots)) after slot n, where CBG-based retransmission is configured by higher layer signaling. x may be a fixed value or a value that the terminal can freely select from a predetermined range.

### <Different DCI Formats>

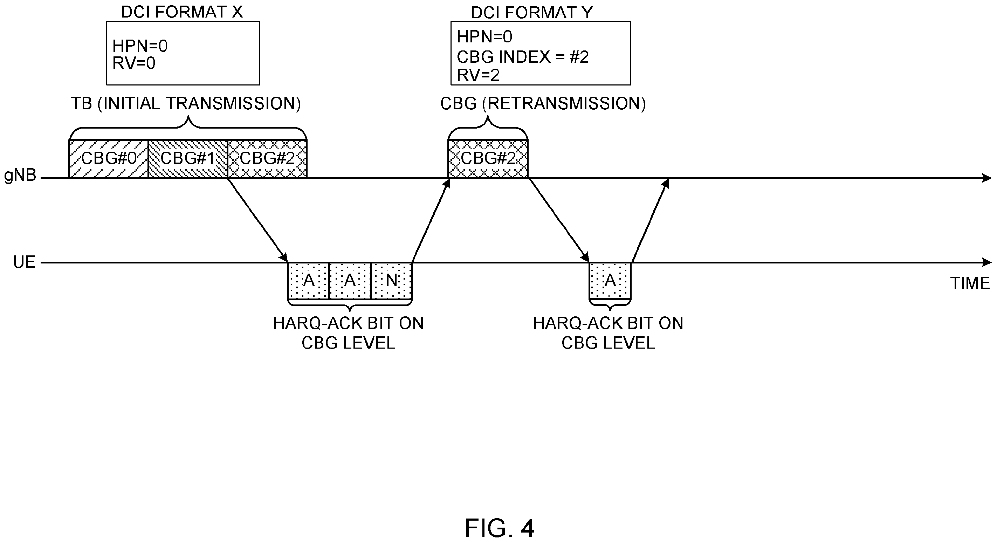

FIG. 4 is a diagram to show an example of initial transmission and retransmission according to the first example of the present invention. In FIG. 4, CBG-based retransmission is configured in a user terminal by higher layer signaling. For example, in FIG. 4, a TB includes 3 CBGs #0 to #2.

Referring to FIG. 4, a radio base station (gNB) transmits DCI in DCI format X for initial transmission, and performs initial transmission of the TB formed with CBGs #0 to #2, via PDSCH. For example, in FIG. 4, since the user terminal fails to decode CBG #2 in the initially-transmitted TB, HARQ-ACK bits (for example, 3 bits), representing ACKs in response to CBGs #0 and #1 and a NACK in response to CBG #2, are transmitted.

In response to the NACK for CBG #2 from the user terminal, the radio base station transmits DCI in DCI format Y for retransmission, and retransmits CBG #2 via PDSCH. For example, in FIG. 4, since the user terminal successfully decodes retransmitted CBG #2, an HARQ-ACK bit (for example, 1 bit) to represent an ACK in response to retransmitted CBG #2 is transmitted.

As shown in FIG. 4, DCI format X for initial transmission may include the value of the HPN field (HPN field value) that shows the HARQ process number (HPN) assigned to the TB, and/or the value of the RV field (RV field value) that shows the RV of this TB. Also, since initial transmission is performed in TB units, DCI format X for initial transmission needs not include information about every CBG (for example, CBG index) that constitutes this TB.

On the other hand, since retransmission is likely to be performed in CBG units, DCI format Y for use for retransmission includes information that indicates the CBG that is retransmitted (CBG information). This CBG information may be a bitmap consisting of a number of bits to match the number of CBGs in a TB, or may be a binary number that indicates the index value of a retransmitted CBG. For example, as shown in FIG. 4, when CBG #2 is retransmitted, the CBG information may be the bitmap "001," or may be the binary number "010" that represents CBG index #2.

Also, DCI format Y for use for retransmission may include an HPN field value that shows the HPN of a retransmitting CBG and/or an RV field that shows the RV of a retransmitting CBG. Since an HPN is assigned to every TB (and therefore common to CBs #0 to #2 that form this TB), the HPN field of DCI format Y may show the same HPN (for example, HPN=0 in FIG. 4) as that of initial transmission. As for the RV, a different RV from that of initial transmission or the same RV may be used.

As shown in FIG. 4, when different DCI formats X and Y are used for initial transmission and retransmission, DCI formats X and Y need not include an indicator (NDI) for distinguishing between initial transmission and retransmission. Meanwhile, the user terminal has to monitor (blind-decode) both DCI formats X and Y.

As described above, when different DCI formats X and Y are used for initial transmission and retransmission, although the burden of processing related to monitoring (blind-decoding) increases in the user terminal, the NDI field becomes unnecessary, so that the overhead of DCI can be reduced.

Note that, when different DCI formats are used between initial transmission and retransmission, a number of DCIs in these different DCI formats (also simply referred to as "different DCI formats") may be transmitted using at least one of (1) different resources, (2) different transmission schemes, (3) different reference signal (RS) configurations, and (4) different mapping schemes.

### (1) When different resources are used

Different resources, in which DCI format X is transmitted at the time of initial transmission and DCI format Y is transmitted at the time of retransmission, may be different search spaces, or may be different control resources sets (CORESETs). A CORESET may be referred to as a "control subband," a "control resource," a "control field," and the like. For example, when DCI formats X and Y are transmitted in different search spaces, the user terminal can apply a single DCI format (DCI payload) to the blind decoding of each search space.

### (2) When different transmission schemes are used

For example, DCI format X at the time of initial transmission may be transmitted based on user terminal-specific beamforming and/or precoding, and DCI format Y at the time of retransmission may be transmitted based on transmission diversity (for example, beam-cycling and/or precoder-cycling). In this case, the user terminal may apply different transmission schemes to the demodulations of DCI formats X and Y.

### (3) When different RS configurations are used

The user terminal may apply different RS configurations to the demodulation of DCI format X at the time of initial transmission and the demodulation of DCI format Y at the time of retransmission.

### (4) When different mapping schemes are used

For example, DCI format X at the time of initial transmission may be transmitted based on distributed mapping, and DCI format Y for retransmission may be transmitted based on localized mapping. In this case, the downlink control channel for initial transmission provides a frequency diversity effect, so that the quality of initial transmission can be improved. By contrast with this, DCI format X at the time of initial transmission may be transmitted based on localized mapping, and DCI format Y for retransmission may be transmitted based on distributed mapping. In this case, initial transmission is made using optimal resources per user, but, when transmission fails, control signals having gained improved quality by virtue of a frequency diversity effect can be transmitted.

Note that information about the transmission of DCI format X at the time of initial transmission and DCI format Y at the time of retransmission described above (at least one of (1) the resource, (2) the transmission scheme, (3) the RS configuration and (4) the mapping scheme) may be reported to the user terminal via higher layer signaling (for example, in a system information block (SIB) or via RRC signaling).

### <Same DCI Format>

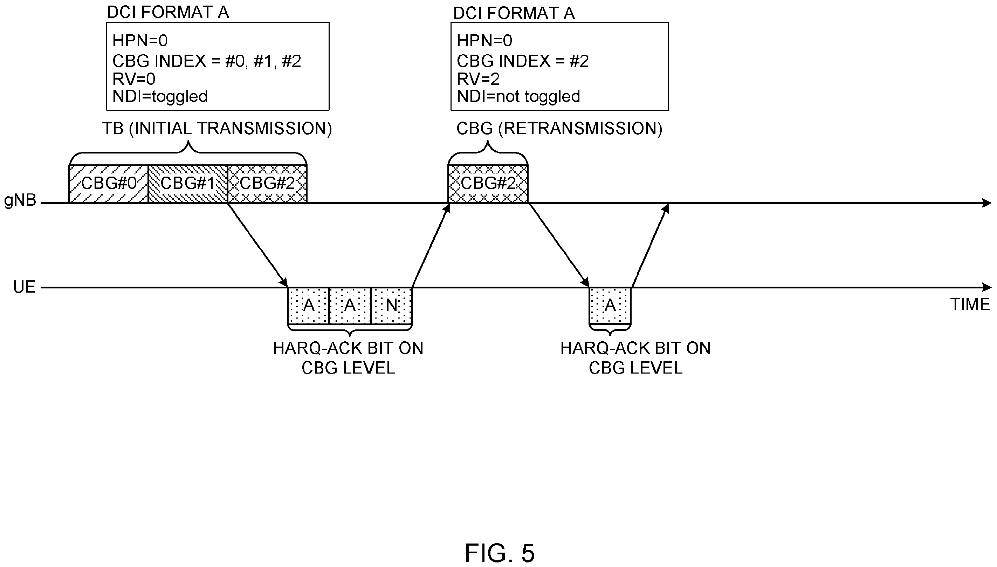

Next, a case where the same DCI format is used for initial transmission and retransmission will be described. FIG. 5 is a diagram to show another example of initial transmission and retransmission according to the first example. In FIG. 5, CBG-based retransmission is configured in a user terminal by higher layer signaling. For example, in FIG. 5, as in FIG. 4, a TB includes 3 CBGs #0 to #2. Differences from FIG. 4 will be primarily described below.

Referring to FIG. 5, a radio base station (gNB) transmits DCI of DCI format A for initial transmission, and performs initial transmission of the TB formed with CBGs #0 to #2, via PDSCH. In FIG. 5, in response to a NACK for CBG #2 from the user terminal, the radio base station transmits DCI in the same DCI format A as in initial transmission, and retransmits CBG #2 via PDSCH.

As shown in FIG. 5, when DCI format A, which applies in common to initial transmission and retransmission, is used, it is necessary to report to the user terminal which CBG is retransmitted. Therefore, DCI format A that applies in common to initial transmission and retransmission includes information that indicates a scheduled CBG (CBG information). This CBG information may be a bitmap comprised of a number of bits to match the number of CBGs in a TB, or a binary number that indicates the index value of the scheduled CBG.

For example, as shown in FIG. 5, upon initial transmission of a TB comprised of CBGs #0 to #2, the CBG information may be the bitmap "111," or may include the binary numbers "000," "001," and "010," that represent CBG indices #0, #1 and #2. Also, at the time of retransmission of CBG #2, the CBG information may be the bitmap "001" or may be the binary number "010" that represents CBG index #2.

Also, as shown in FIG. 5, DCI format A, which applies in common to initial transmission and retransmission, may include an HPN field value that shows an HPN. Since an HPN is assigned to every TB (and therefore common to CBs #0 to #2 that form this TB), the HPN field of DCI format A may show the same HPN (for example, HPN=0 in FIG. 5) at the time of initial transmission and retransmission.

Also, DCI format A, which applies in common to initial transmission and retransmission, includes an indicator (NDI) for distinguishing between initial transmission and retransmission. As shown in FIG. 5, the NDI in DCI format A is toggled at the time of initial transmission, but does not have to be toggled at the time of retransmission. To be more specific, at the time of initial transmission, the NDI may be configured to a value that is different from the latest value of the same HARQ process, and, at the time of retransmission, the NDI may be configured to the same value as the latest value of the same HARQ process.

DCI format A, which applies in common to initial transmission and retransmission, may include an RV field that shows the RVs of one or more scheduled CBGs. This RV field may be a single field that shows an RV that applies in common to one or more scheduled CBGs. Alternatively, an RV field may be provided for every scheduled CBG, and show every CBG's RV.

As described above, when DCI format A that applies to initial transmission and retransmission in common is used, although an NDI is necessary to distinguish between initial transmission and retransmission, the number of DCI formats which the user terminal has to monitor (blind-decode) decreases, so that the burden of processing related to monitoring in the user terminal can be reduced.

Also, when DCI format A that applies to initial transmission and retransmission in common is used, even when CBG-based retransmission falls back to TB-based retransmission, it is not necessary to change the DCI format, so that the fallback to TB-based retransmission is easy is easy. For example, with reference to FIG. 5, DCI format A, including CBG information that indicates that CB #0 to CB #2 are scheduled and an NDI that is not toggled, is used, so that the fallback to TB-based retransmission is easy.

According to the first example, the DCI format is controlled between initial transmission and retransmission, so that TB-based and/or CBG-based transmission (including retransmission) and/or receipt can be controlled properly.

### (Second Example)

With a second example of the present invention, control of DCI formats (DCI) that are used to schedule TBs and CBGs will be described. In the second example, different DCI formats may be used when scheduling TBs and when scheduling CBGs, or the same DCI format may be used. Differences from the first example will be primarily described below.

### <Different DCI Formats>

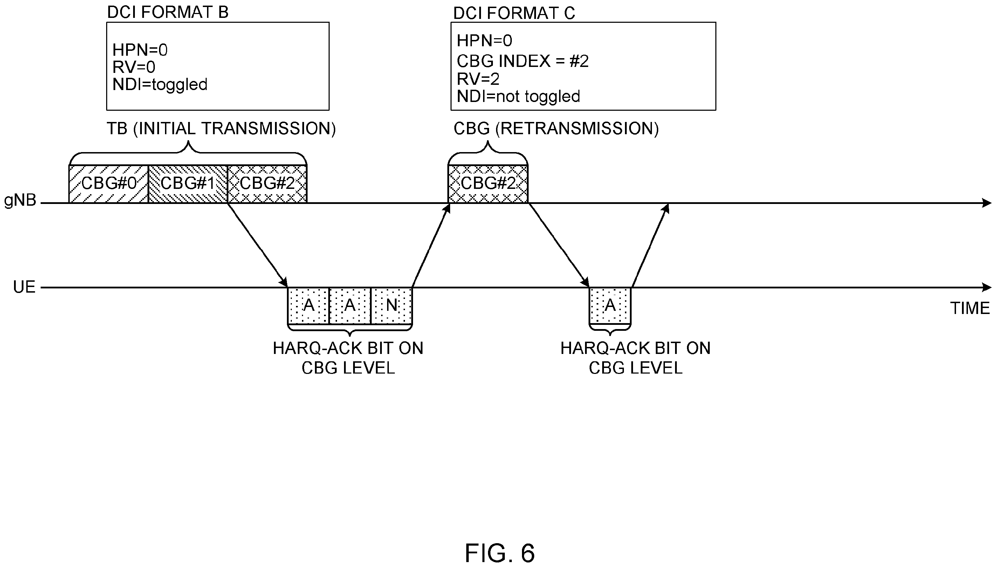

FIG. 6 is a diagram to show an example of initial transmission and retransmission according to a second example of the present invention. In FIG. 6, CBG-based retransmission is configured in a user terminal by higher layer signaling. For example, in FIG. 6, as in FIG. 4, a TB includes 3 CBGs #0 to #2. Differences from FIG. 4 will be primarily described below.

Referring to FIG. 6, a radio base station (gNB) transmits DCI in DCI format B for TBs, and performs initial transmission of the TB formed with CBGs #0 to #2, via PDSCH. In FIG. 6, in response to a NACK for CBG #2 from the user terminal, the radio base station transmits DCI format C for CBGs, and retransmits CBG #2 via PDSCH.

As shown in FIG. 6, since DCI format B is used to schedule one or more TBs, information about every CBG (for example, CBG index) that constitutes this TB does not have to be included. Meanwhile, since DCI format C is used to schedule one or more CBGs DCI format C includes information that indicates the CBG that is retransmitted (CBG information). Details of the CBG information are the same as DCI format Y of FIG. 4.

As shown in FIG. 6, DCI format B for TBs and DCI format C for CBGs may include at least one of an HPN field value that shows an HPN, and the value of an RV field that shows an RV (RV field value). For example, the HPNs in DCI formats B and C may show HPNs that are assigned per TB (an HPN is used in common for CBGs #0 to #2). Also, the RV field of DCI format B may show the RV of the TB. The RV field of DCI format C may show each TB's RV (an RV that is used in common for CBGs #0 to #2) or may show each CBG's RV.

When CBG-based retransmission falls back to TB-based retransmission, retransmitting TBs may be scheduled. That is, when a given TB is retransmitted in CBG-based retransmission, the next retransmission may be performed in TB-based retransmission. Therefore, DCI format B for TBs may include an NDI that indicates initial transmission or retransmission. The NDI in DCI format B is toggled at the time of initial transmission, but does not have to be toggled at the time of retransmission.

The user terminal may determine whether DCI schedules TBs or CBGs (which one of DCI format B and DCI format C is used) based on at least one of the (1) payload and (2) the transmission resource of the DCI.

### (1) When DCI payload is used

When DCI payload varies between DCI format B and DCI format C, the user terminal may identify DCI format B or DCI format C based on the payload of this DCI. In this case, which CBG is retransmitted may be explicitly specified by the CBG information in DCI format C.

### (2) When the transmission resource is used

When DCI transmission resource (for example, search space or CORESET) varies between DCI format B and DCI format C, the user terminal may identify DCI format B or DCI format C based on this transmission resource.

As described above, when different DCI formats B and C are used when scheduling TBs and when scheduling CBGs, even when CBG-based retransmissions falls back to TB-based retransmission (such as when data that is retransmitted in CBG-based retransmission is next retransmitted in TB-based retransmission) the DCI format has only to be switched, and the fallback is made easy. For example, in FIG. 6, DCI format B that includes an NDI that is not toggled is used, so that the user terminal can recognize that this retransmission is TB-based retransmission (fallback).

### <Same DCI Format>

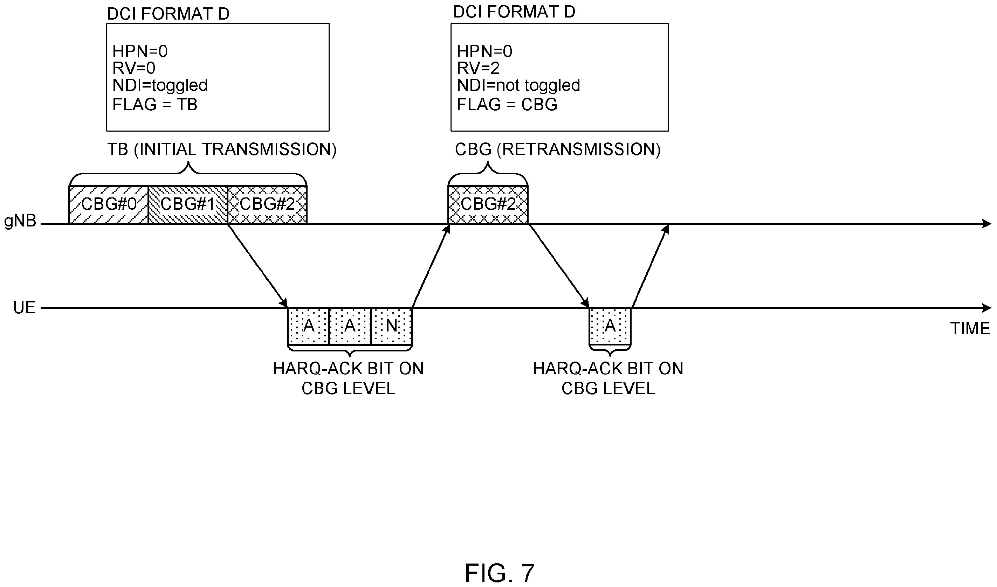

Next, a case where the same DCI format is used when scheduling TBs and scheduling CBGs will be described. FIG. 7 is a diagram to show another example of initial transmission and retransmission according to the second example. In FIG. 7, CBG-based retransmission is configured in a user terminal by higher layer signaling. For example, in FIG. 7, as in FIG. 4, a TB includes 3 CBGs #0 to #2. Differences from FIG. 5 will be primarily described below.

Referring to FIG. 7, a radio base station transmits DCI of DCI format D for TBs, performs initial transmission of the TB formed with CBGs #0 to #2, via PDSCH. In FIG. 7, in response to the NACK for CBG #2 from the user terminal, the radio base station transmits DCI of DCI format D, which is the same as for scheduling TBs, to schedule CBG #2, and retransmits CBG #2 via PDSCH.

As shown in FIG. 7, when the same DCI format D is used when scheduling TBs and when scheduling CBGs, indicator information (also referred to as "flag," "indicator flag" and the like) is required to show whether TBs are scheduled or CBGs are scheduled. Therefore, as shown in FIG. 7, DCI format D scheduling a TB may include a flag (for example, the 1-bit value of "0") that indicates a TB, and DCI format D scheduling CBG #2 may include a flag (for example, the 1-bit value of "1") that indicates a CBG.

Also, in FIG. 7, if DCI format D is used to schedule a CBG, CBG information that indicates which CBG is scheduled or not may or may not be included in DCI format D. If CBG information is not included in DCI format D, which CBG is scheduled may be indicated implicitly.

According to the invention as claimed, to indicate a scheduled CBG implicitly, a scheduled CBG is indicted by using a search space (SS). According to further examples, an RNTI (Radio Network Temporary Identifier) or an aggregation level may be used.

As described above, when the same DCI format D is used when scheduling TBs and when scheduling CBGs, the number of DCI formats which the user terminal has to monitor (blind-decode) decreases, so that the burden of processing related to monitoring in the user terminal can be reduced.

Also, even when CBG-based retransmission falls back to TB-based retransmission (such as when data that is retransmitted in CBG-based retransmission is next retransmitted in TB-based retransmission), the DCI format does not have to be switched, so that the fallback is easy. For example, as shown in FIG. 7, DCI format D that includes a flag to indicate that a TB is scheduled and an NDI that is not toggled is used, so that the user terminal can recognize (fall back) that this retransmission is TB-based retransmission.

According to the second example, the DCI format is controlled between when scheduling TBs and when scheduling CBGs, so that TB-based and/or CBG-based transmission (including retransmission) and/or receipt can be controlled properly.

### (Third Example)

In a third example of the present invention, how to control receipt of retransmitting CBGs based on the cause of the CBGs' retransmission (the cause of decoding failure in the user terminal) will be explained. Retransmission of CBGs (decoding failure) is suitable (1) when an error (uncorrelated error) occurs in part of the CBs/CBGs in a TB due to thermal noise or interference, failure of adaptive control, and so forth, or (2) when transmission apart from the original data takes place in part of the resources allocated for the original data, and, as a result, part of the resources reserved for the original data is punctured (rewritten). That is, these are likely causes of retransmission of CBGs.
(1) An uncorrelated error in a TB might occur with respect to a small number of CBGs (for example, 1 CBG) in the TB, for example, during high-speed communication. The user terminal stores the CBG that has failed to be decoded due to the uncorrelated error in the soft buffer. When this CBG is retransmitted, the user terminal may synthesize the CBG to retransmit and the CBG stored in a soft buffer. The CBG stored in the soft buffer contains an error, but is the same TB's data, so that, by synthesizing with the retransmitting CBG, its received quality improved.

On the other hand, (2) part of a TB may be punctured, for example, upon pre-emption by a short TTI. A CBG that has failed to be decoded due to puncturing is not data of the same TB (data for another transmission), and so synthesizing it with a retransmitted CBG is not effective for improving the received quality. Therefore, if a CBG that has failed to be decoded due to puncturing is stored in the soft buffer, the user terminal discards this CBG (this discarding is also referred to as "flushing," and the like), and decodes the retransmitted CBG without synthesizing it with the CBG.

Thus, it is desirable to change how to control the decoding of retransmitting CBGs in the user terminal based on the cause of the CBGs' retransmission (the cause of decoding failure). Thus, with the third example, the user terminal controls the decoding of retransmitting CBGs based on the cause of the CBGs' retransmission (also referred to as the "cause of decoding failure" or the "cause of CBG error").

To be more specific, if puncturing is the cause of CBG retransmission, the user terminal may decode this retransmitted CBG by discarding the CBG stored in the soft buffer. On the other hand, if an uncorrelated error is the cause of CBG retransmission, the user terminal may synthesize the CBG stored in the soft buffer, and this retransmitted CBG, and decode this retransmitted CBG.

According to the third example, a number of retransmitting CBGs that are retransmitted due to different causes may be scheduled by using DCIs of the same DCI format, may be scheduled by using DCIs of different DCI formats, or may be scheduled at different timings.

### <Same DCI Format>

If DCIs of the same (common) DCI format is used for multiple retransmitting CBGs that are retransmitted due to different causes, these DCIs of the same DCI format may have a predetermined field value that indicates the cause of each CBG's retransmission. Based on this predetermined field value, the user terminal recognizes the cause of CBG retransmission. The predetermined field value may be the value of a new field value or may be the value of an existing field (for example, the RV field).

### <<When New Field is Used>>

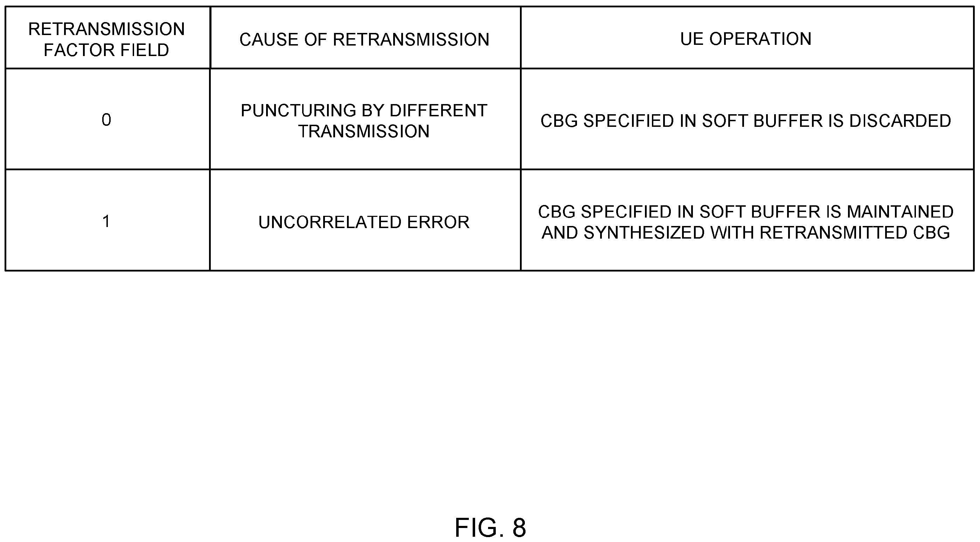

FIG. 8 is a diagram to show an example of a predetermined field showing the cause of retransmission of CBG according to a third example of the present invention. As shown in FIG. 8, A 1-bit new field (for example, retransmission factor field) that indicates the cause of retransmission for each CBG may be introduced. For example, in FIG. 8, the retransmission factor field value "0" represents (2) puncturing by different transmission, and the retransmission factor field value "1" represents (1) an uncorrelated error.

When the value of the retransmission factor field in a DCI is "0" the user terminal discards a CBG in the soft buffer, and decodes the retransmitted CBG scheduled by this DCI. Which CBG in the soft buffer is discarded may be specified by this DCI (for example, by the CBG index in this DCI).

On the other hand, when the value of the retransmission factor field in a DCI is "1," the user terminal may decode the retransmitted CBG by synthesizing a CBG in the soft buffer, with the retransmitted CBG scheduled by this DCI. Which CBG in the soft buffer is synthesized with the retransmitted CBG may be specified by this DCI (for example, by the CBG index in this DCI).

Note that the DCI format that is used to schedule a retransmitting CBG may be the same as the DCI format to use to schedule a CBG that has failed to be decoded regardless of the cause of retransmission.

Also, when the retransmission factor field is introduced, a single RV field that is common to all CBGs may be provided in DCI. When the retransmission factor field value is "0," the user terminal may ignore the RV field value in the DCI and assume that the RV of the retransmitting CBG is 0. On the other hand, when the retransmission factor field value is "1," the user terminal may assume that the value of the RV field in the DCI shows the RV of the retransmitting CBG (the user terminal may apply the RV shown by the RV field value to the retransmitting CBG).

Also, multiple retransmitting CBGs with different causes of retransmission may be scheduled in the same DCI. For example, CBG #0, in which the retransmission factor field value is "0," and CBG #X, in which the retransmission factor field value is "1," may be scheduled by the same DCI.

As shown in FIG. 8, when the retransmission factor field is newly introduced in DCI, the payload of DCI increases, the decoding of retransmitted CBGs in the user terminal can be controlled more easily.

### <<When using Existing Field>>

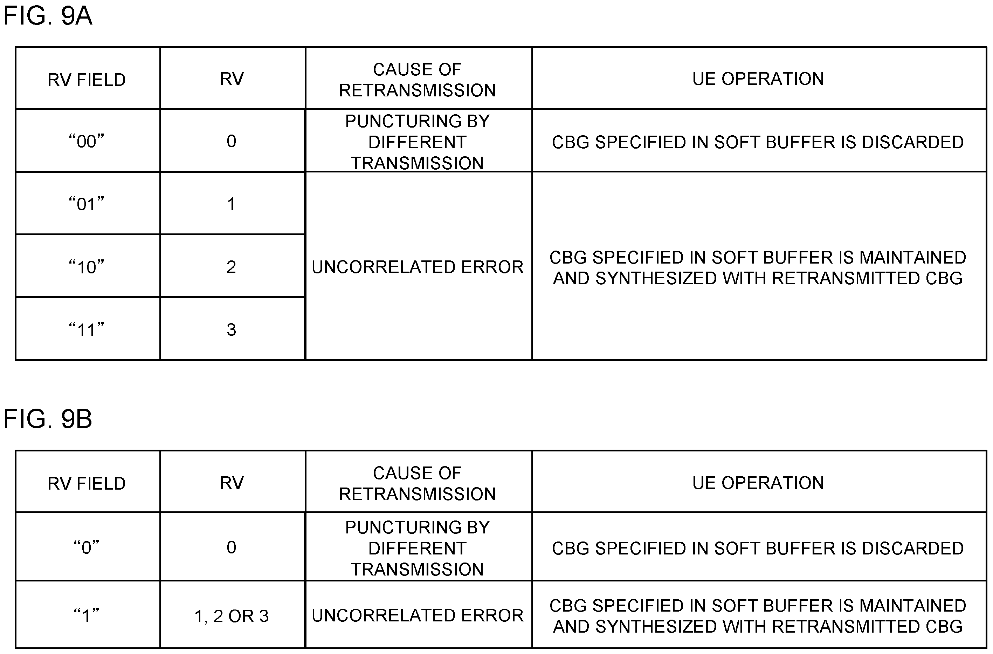

FIG. 9 is a diagram to show an example of a predetermined field showing the cause of retransmission of CBG according to a third example of the present invention. In FIGs. 9 the existing RV field shows the cause of retransmission of CBGs (cause of decoding failure or cause of CBG error). In this case, the RV field may be provided for each CBG. FIG. 9A shows a 2-bit RV field, and FIG. 9B shows a 1-bit RV field. Note that the number of bits of the RV field does not have to be 1 bit or 2 bits, and may be 3 bits or more.

As shown in FIG. 9A, the 2-bit RV field value may be associated with the RV value and the cause of CBG retransmission. For example, in FIG. 9A, the RV field value "00" may represent RV0 and indicate that puncturing by different transmission is the cause of retransmission. This is because, if puncturing is the cause of retransmission, the RV of the retransmitting CBG is likely to be 0. Also, the RV field values "01," "10" and "11" may represent RV1, RV2 and RV3, respectively, and indicate that an uncorrelated error is the cause of retransmission.

Likewise, in FIG. 9B, the 1-bit RV field value may be associated with the RV value and the cause of CBG retransmission. For example, in FIG. 9B, the RV field value "0" may represent RV0 and indicate that puncturing by different transmission is the cause of retransmission. Also, the RV field value "1" may represents either RV1, RV2 or RV3 and indicate that an uncorrelated error is the cause of retransmission.

When the RV field value is "00" (FIG. 9A) or "0" (FIG. 9B), the user terminal discards a CBG in the soft buffer, and decodes the retransmitted CBG scheduled by this DCI. Which CBG in the soft buffer is discarded may be specified by this DCI (for example, by the CBG index in this DCI).

On the other hand, if the value of the retransmission factor field in DCI is either "01," "10" or "11" (FIG. 9A) or "1" (FIG. 9B), the user terminal may decode the retransmitted CBG by synthesizing a CBG in the soft buffer, with the retransmitted CBG scheduled by this DCI. Which CBG in the soft buffer is synthesized with the retransmitted CBG may be specified by this DCI (for example, by the CBG index in this DCI).

Note that the DCI format that is used to schedule a retransmitting CBG may be the same as the DCI format to use to schedule a CBG that has failed to be decoded, regardless of the cause of retransmission.

Also, multiple retransmitting CBGs with different causes of retransmission may be scheduled in the same DCI. For example, CBG #0, in which the RV field value is "0," and CBG #X, in which the RV field value is "1," may be scheduled by the same DCI.

As shown in FIGs. 9, when the value of the RV field per CBG indicates the cause of retransmission of each CBG, the overhead of DCI can be reduced compared to the case where a new field to show the cause of CBG retransmission is introduced.

Note that the user terminal may be commanded, via higher layer signaling, to change the control as to whether to synthesize or discard a CBG in the soft buffer, depending on the RV field value. That is, when this control is not configured by higher layer signaling, the user terminal synthesizes a CBG in the soft buffer with a retransmitted CBG, regardless of the value of the RV field, When the above control is configured, the user terminal selects between synthesizing and discarding, depending on the value of the RV field. This higher layer signaling may be different from the higher layer signaling that configures CBG-based retransmission control. In this case, CBG-based retransmission can be controlled more flexibly. Alternatively, when CBG-based retransmission control is configured via higher layer signaling, the user terminal may exert control so as to select between synthesizing and discarding according to the value of the RV field. In this case, the overhead of higher layer signaling can be reduced.

### <Different DCI Formats>

When DCIs of different DCI formats are used for a number of retransmitting CBGs that are retransmitted due to different causes, the user terminal recognizes the cause of the CBGs' retransmission from the DCI format. DCI format Z1, which is used to schedule a CBG that is retransmitted due to an uncorrelated error, may include an RV field, and DCI format Z2, which is used to schedule a CBG that is retransmitted due to puncturing by different transmission may not include an RV field.

Note that the user terminal may be commanded, by higher layer signaling, to monitor DCI format Z1 and DCI format Z2. That is, if the above control is not configured by higher layer signaling, the user terminal monitors DCI format Z1 and DCI format Z2, and, the user terminal selects between synthesizing a CBG in the soft buffer with a retransmitted CBG, and discarding it, depending on which DCI format is detected. This higher layer signaling may be different from the higher layer signaling that configures CBG-based retransmission control. In this case, CBG-based retransmission can be controlled more flexibly. Alternatively, when CBG-based retransmission control is configured via higher layer signaling, the user terminal may exert control so as to select between synthesizing and discarding according to the value of the RV field. In this case, the overhead of higher layer signaling can be reduced.

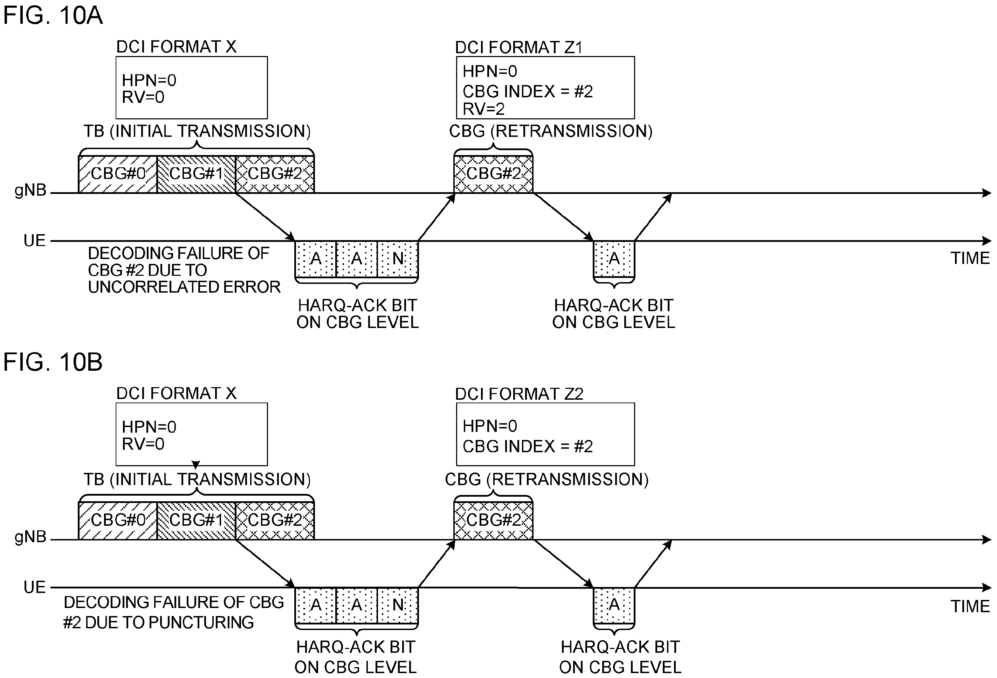

FIG. 10 is a diagram to show an example of scheduling of retransmitting CBGs according to the third example. In FIG. 10, CBG-based retransmission is configured in a user terminal by higher layer signaling. For example, in FIG. 10A, decoding of CBG #2, which is transmitted initially, fails due to an uncorrelated error. Meanwhile, in FIG. 10B, decoding of CBG #2, which is transmitted initially, fails due to puncturing.

As shown in FIG. 10A, CBG #2, which is retransmitted due to an uncorrelated error, may be scheduled by DCI format Z1. DCI format Z1 may include an RV field, and the value of this RV field may show an R that applies in common to one or more CBGs to be retransmitted due to uncorrelated errors. For example, in FIG. 10A, the RV field value in DCI format Z1 shows RV2, which applies to retransmitting CBG #2.

In FIG. 10A, when the user terminal detects DCI format Z1, the user terminal synthesizes CBG #2 stored in the soft buffer, with retransmitted CBG #2 scheduled by DCI format Z1. As a result, the received quality of retransmitted CBG #2 can be improved.

As shown in FIG. 10B, CBG #2 that is retransmitted due to puncturing may be scheduled by DCI format Z2. Since the RV of retransmitted CBG #2 is 0, DCI format Z2 does not have to have an RV field.

In FIG. 10B, when the user terminal detects DCI format Z2, the user terminal discards CBG #2 stored in the soft buffer, and decodes retransmitted CBG #2 scheduled by DCI format Z2. As a result, it is possible to avoid synthesizing data related to different communication with retransmitted CBG #2.

In FIGs. 10A and 10B, the user terminal may recognize the cause of retransmission of CBGs from the payload of the DCI format. As described above, since DCI formats Z1 and Z2 are likely to have different payloads, the user terminal may identify the cause of CBG retransmission from the DCI format's payload.

Alternatively, the user terminal may recognize the cause of retransmission of CBGs based on in which resource DCI is detected (for example, based on the search space and/or the CORESET where DCI is detected). In this case, DCIs of DCI formats Z1 and Z2 may be allocated to different search spaces and/or different CORESETs.

### <Different Timings>

When a number of retransmitting CBGs that are retransmitted due to different causes are scheduled at different timings, the user terminal identifies the cause of each CBG's retransmission based on the timing each retransmitting CBG is scheduled.

For example, when a retransmitting CBG is scheduled (transmitted) by a predetermined timing T, the user terminal may recognize that puncturing by different communication is the cause, while, when a retransmitting CBG is scheduled after the predetermined timing T, the user terminal may recognize that an uncorrelated error is the cause.

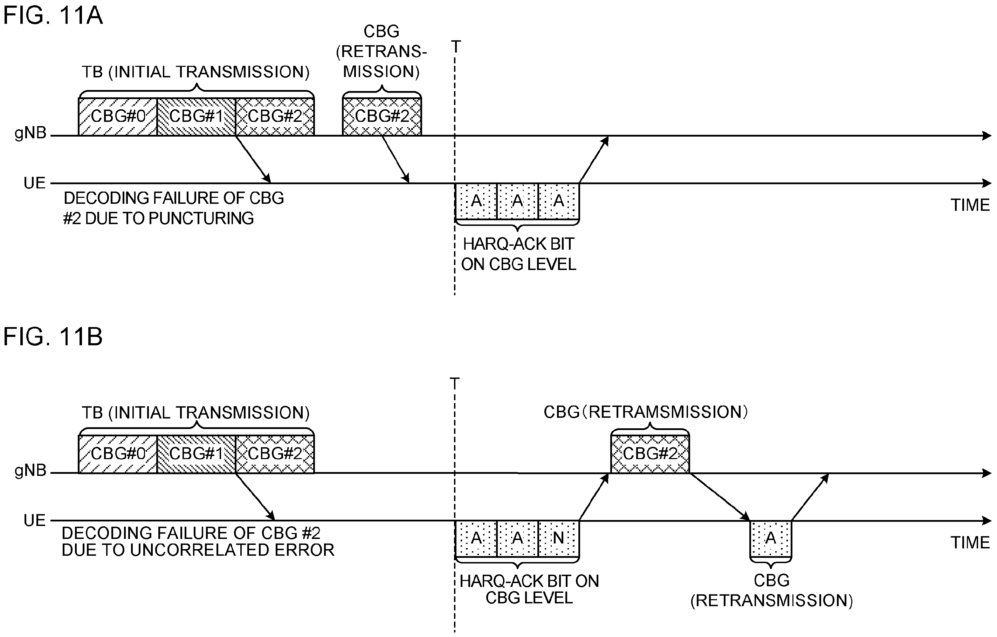

FIG. 11 is a diagram to show another example of scheduling of retransmitting CBGs according to the third example. In FIG. 11, CBG-based retransmission is configured in a user terminal by higher layer signaling. For example, in FIG. 11A, the decoding of CBG #2, which is transmitted initially, fails due to puncturing. Meanwhile, in FIG. 11B, the decoding of CBG #2, which is transmitted initially, fails due to an uncorrelated error.

As shown in FIG. 11A, when a retransmitting CBG is scheduled before a predetermined timing T, the user terminal discards CBG #2 stored in the soft buffer, and decodes retransmitted CBG #2.

The predetermined timing T may be determined based on the timing an HARQ-ACK is transmitted as feedback. For example, when a CBG that has failed to be decoded is received in slot n, the predetermined timing T may be in the same slot n+k (K≥0) with the HARQ-ACK feedback timing, or in slot n+k+α. In this case, α≥0, and this is a predetermined offset with respect to the HARQ-ACK feedback timing.

As shown in FIG. 11A, when decoding fails due to puncturing, the radio base station may retransmit punctured CBG #2 without waiting for the HARQ-ACK bit from the user terminal. Therefore, when retransmitting CBG #2 is scheduled before the predetermined timing T based on the timing an HARQ-ACK is transmitted as feedback, the user terminal may recognize that puncturing is the cause of retransmission of CBG #2, and discard CBG #2 stored in the soft buffer.

On the other hand, as shown in FIG. 11B, when a retransmitting CBG is scheduled after the predetermined timing T, the user terminal synthesizes CBG #2 stored in the soft buffer, with retransmitting CBG #2, and decodes retransmitted CBG #2.

As shown in FIG. 11B, if decoding fails due to an uncorrelated error, when the HARQ-ACK bit from the user terminal indicates a NACK, the radio base station retransmits CBG #2 corresponding to the NACK. Therefore, when retransmitting CBG #2 is scheduled after the predetermined timing T based on the timing an HARQ-ACK is transmitted as feedback, the user terminal may recognize that an uncorrelated error is the cause of retransmission of CBG #2 and may synthesize CBG #2 and retransmitting CBG #2 stored in the soft buffer.

As shown in FIGs. 11A and 11B, if the user terminal recognizes the cause of CBG retransmission from the timing T where a retransmitting CBG is scheduled, the user terminal may schedule a number of retransmitting CBGs that are retransmitted due to different causes by using DCIs of the same DCI format. Note that FIGs. 11 do not presume scheduling a number of retransmitting CBGs that are retransmitted due to different causes by using a single DCI.

### <Discarding of CBG>

The third example has been described so fat such that, when puncturing is the cause of retransmission, a CBG in the soft buffer is discarded. However, when a retransmitting CBG is scheduled, the user terminal may discard (flush) corresponding CBGs in the soft buffer, regardless of the cause of retransmission.

DCI that schedules retransmitting CBGs may include information that identifies retransmitting CBGs explicitly or implicitly. Regardless of the cause of retransmission, when a CBG in the soft buffer is discarded, the RV field in DCI that schedules a retransmitting CBG may be common to all the CBGs in the TB. Also, the RV which the RV field value shows may be fixed at 0, or, the RV field may be omitted.

Also, the NDI field in this DCI may be common to all the CBGs in the TB. As described above, in the event of initial transmission, the NDI is configured to a value that is different from the latest value of the same HARQ process (toggled), while, in the event of retransmission, the NDI is configured to the same value as the latest value of the same HARQ process (not toggled).

Also, the user terminal may discard all the corresponding CBGs up to the previous transmission (or retransmission), from the soft buffer.

According to the third example described above, the decoding of retransmitting CBGs based on the cause of the CBGs' retransmission, so that the user terminal can prevent different transmission due to puncturing from being wrongly synthesized with a retransmitted CBG.

### (Fourth Example)

With a fourth example of the present invention, control of fallback from CBG-based retransmission to TB-based retransmission will be described.

If CBG-based retransmission is configured for a user terminal, the user terminal may fall back from CBG-based retransmission to TB-based retransmission based on predetermined conditions. For example, in at least one of following cases (1) to (4), it may be assumed that the user terminal falls back to TB-based retransmission:
(1) when DCI indicates TB-based retransmission;
(2) when DCI is detected in a search space that is common to one or more user terminals (also referred to as "common search space" or "group search space," etc.);
(3) when ACKs in response to all CBGs in the TB are identified, but a NACK is identified for the TB (when one or more CBGs cause a NACK-to-ACK error in the radio base station); and
(4) when the number of CBGs in TB at initial transmission is 1.

Also, in at least one of cases (1) to (4) above, the user terminal may generate an ACK or a NACK based on the decoding result of the TB as a whole, and send this ACK or NACK as feedback. Also, when the user terminal falls back to TB-based retransmission, the user terminal may or may not discard (flush) the TB in the soft buffer.

According to the fourth example, CBG-based retransmission falls back to TB-based retransmission based on predetermined conditions, so that, even when CBG-based retransmission is configured in the user terminal, it is possible to perform proper control in units of TBs.

### (Radio Communication System)

Now, the structure of a radio communication system according to the present embodiment will be described below. In this radio communication system, the radio communication methods according to the above-described embodiments are employed. Note that the radio communication method according to each embodiment described above may be used alone or may be used in combination.

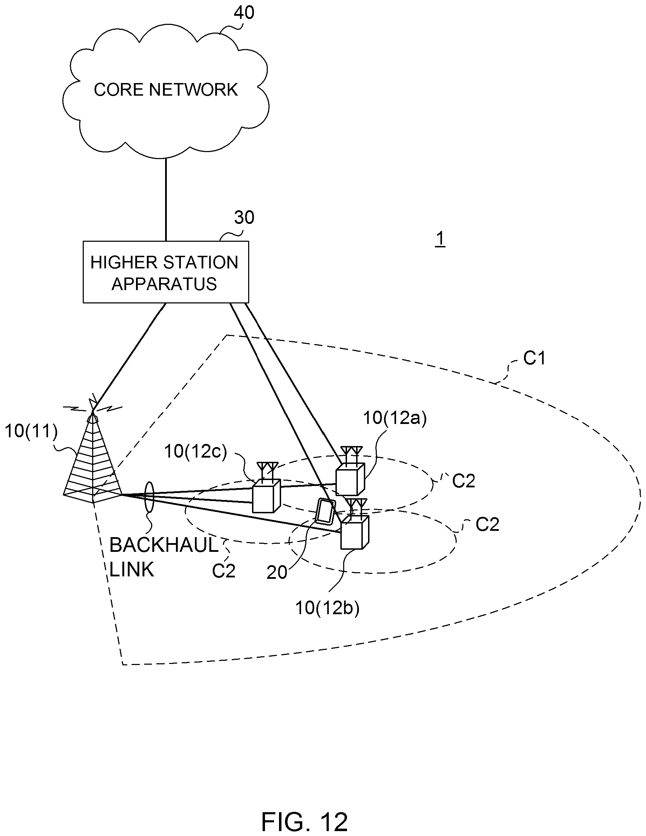

FIG. 12 is a diagram to show an exemplary schematic structure of a radio communication system according to the present embodiment. A radio communication system 1 can adopt carrier aggregation (CA), which groups a number of fundamental frequency blocks (component carriers (CCs)) into one, where an LTE system bandwidth (for example, 20 MHz) is used as 1 unit, and/or dual connectivity (DC). Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in FIG. 12 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A structure in which different numerologies are applied between cells may be adopted here. Note that a "numerology" refers to a set of communication parameters that characterize the design of signals in a given RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, 2 or more CCs). Furthermore, the user terminals can use licensed-band CCs and unlicensed-band CCs as a plurality of cells.

Furthermore, the user terminals 20 can communicate based on time division duplexing (TDD) or frequency division duplexing (FDD) in each cell. A TDD cell and an FDD cell may be referred to as a "TDD carrier (frame structure type 2)" and an "FDD carrier (frame structure type 1)," respectively.

Also, in each cell (carrier), either subframes having a relatively long time length (for example, 1 ms) (also referred to as "TTIs," "normal TTIs," "long TTIs," "normal subframes," "long subframes," "slots," and/or the like), or subframes having a relatively short time length (also referred to as "short TTIs," "short subframes," "slots" and/or the like) may be applied, or both long subframes and short subframe may be used. Furthermore, in each cell, subframes of 2 or more time lengths may be used.

Between the user terminals 20 and the radio base station 11, communication can be carried out using a carrier of a relatively low frequency band (for example, 2 GHz) and a narrow bandwidth (referred to as, for example, an "existing carrier," a "legacy carrier," and/or the like). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between 2 radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform device-to-device (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combination of these, and OFDMA may be used in the UL. Also, SC-FDMA can be applied to a side link (SL) that is used in inter-terminal communication.

DL channels that are used in radio communication system 1 include DL data channel that is shared by each user terminal 20 (also referred to as "PDSCH (Physical Downlink Shared CHannel)," "DL shared channel" and so forth), a broadcast channel (PBCH (Physical Broadcast CHannel)), L1/L2 control channels and so on. At least one of user data, higher layer control information, SIBs (System Information Blocks) and so forth is communicated in the PDSCH. Also, the MIB (Master Information Block) is communicated in the PBCH.

The L1/L2 control channels include DL control channels (such as PDCCH (Physical Downlink Control CHannel), EPDCCH (Enhanced Physical Downlink Control CHannel), etc.), PCFICH (Physical Control Format Indicator CHannel), PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. PUSCH retransmission control information (also referred to as "A/N," "HARQ-ACK," "HARQ-ACK bit," "A/N code book" and so on) can be communicated using at least one of the PHICH, the PDCCH and the EPDCCH.

UL channels that are used in the radio communication system 1 include UL data channel that is shared by each user terminal 20 (also referred to as "PUSCH (Physical Uplink Shared CHannel)," "UL shared channel" and/or the like), a UL control channel (PUCCH (Physical Uplink Control CHannel)), a random access channel (PRACH (Physical Random Access CHannel)) and so on. User data, higher layer control information and so on are communicated by the PUSCH. Uplink control information (UCI), including at least one of retransmission control information (for example, A/N, HARQ-ACK) for the PDSCH, channel state information (CSI) and so on is communicated in the PUSCH or the PUCCH. By means of the PRACH, random access preambles for establishing connections with cells are communicated.

### (Radio Base Station)

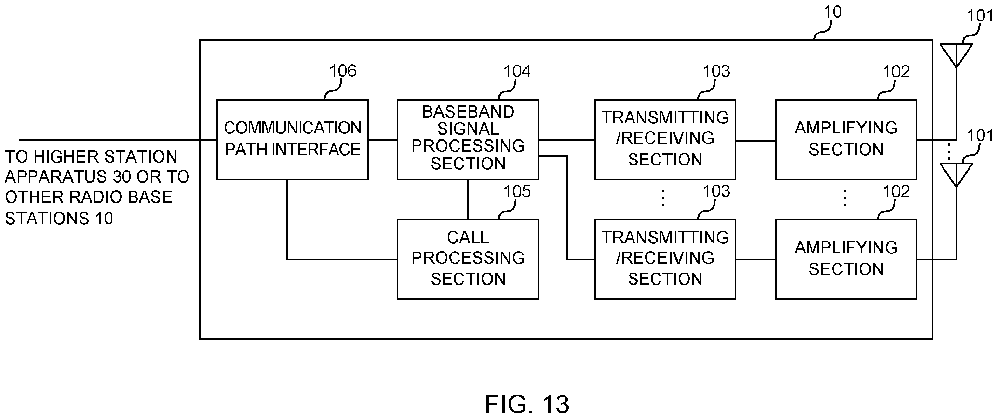

FIG. 13 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) process), scheduling, transport format selection, channel coding, rate matching, scrambling, an inverse fast Fourier transform (IFFT) process and a precoding process, and the result is forwarded to each transmitting/receiving sections 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

A transmitting/receiving section 103 can be constituted by a transmitters/receiver, a transmitting/receiving circuit or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 at least performs call processing such as setting up and releasing communication channels, manages the state of the radio base station 10 or manages the radio resources.

The communication path interface section 106 transmits and receives signals to and from the higher station apparatus 30 via a predetermined interface. Also, the communication path interface 106 may transmit and receive signals (backhaul signaling) with neighboring radio base stations 10 via an inter-base station interface (which is, for example, optical fiber in compliance with the CPRI (Common Public Radio Interface), the X2 interface, etc.).

In addition, the transmitting/receiving sections 103 transmit DL signals (for example, at least one of DCI (DL assignment for scheduling DL data and/or UL grant for scheduling UL data), DL data and DL reference signals), and receive UL signals (for example, at least one of UL data, UCI, and UL reference signals).

In addition, the transmitting/receiving sections 103 receive retransmission control information (also referred to as "ACK/NACK," "A/N," "HARQ-ACK," "A/N codeblock," etc.) related to DL signals. As to how often the retransmission control information is transmitted, for example, the retransmission control information may be transmitted per CB, per CBG, per TB or for every one or more TBs (that is, ACKs or NACKs may be indicated per CB, per CBG, per TB or for every one or more TBs). Also, the transmitting/receiving sections 103 may transmit information about the configuration of the unit for retransmission (TB-based information or CBG-based information) of DL signals and/or UL signals.

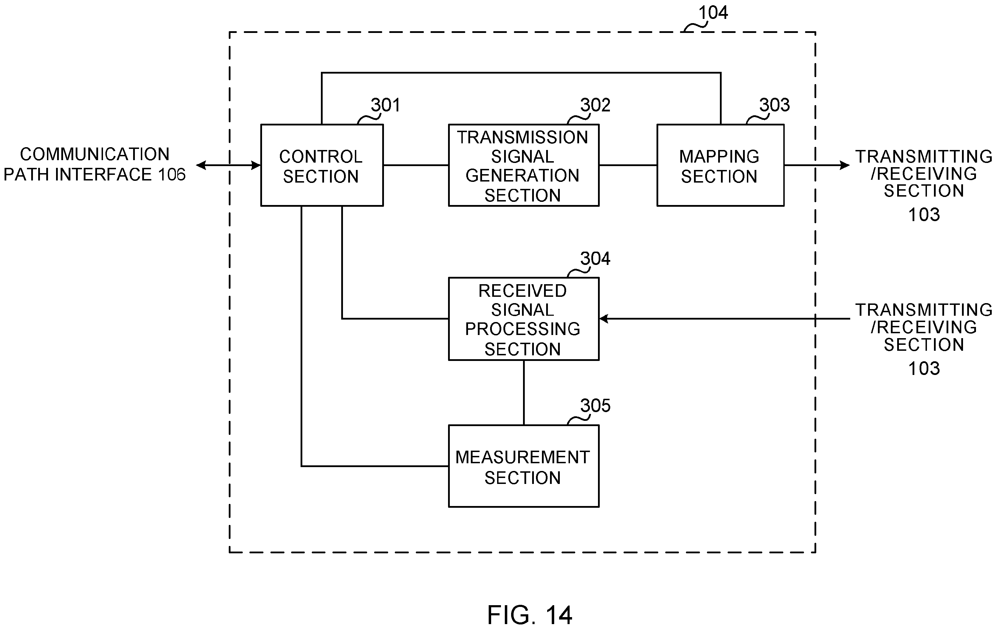

FIG. 14 is a diagram to show an exemplary functional structure of a radio base station according to the present embodiment. Note that, although FIG. 14 primarily shows functional blocks that pertain to characteristic parts of the present embodiment, the radio base station 10 has other functional blocks that are necessary for radio communication as well. As shown in FIG. 14, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, at least one of generation of downlink signals in the transmission signal generation section 302, mapping of downlink signals in the mapping section 303, the receiving process (for example, demodulation) of uplink signals in the received signal processing section 304, and measurements in the measurement section 305.

To be more specific, the control section 301 selects the modulation scheme and/or the TBS for DL signals based on channel quality indicators (CQI) fed back from the user terminal 20. The control section 301 controls the transmission signal generation section 302 to encode DL signals based on the TBS and modulate DL signals based on the modulation scheme. Also, when the TBS exceeds a predetermined threshold, the control section 301 may apply codeblock segmentation to DL signals, whereby a TBS is divided into multiple CBs.

Also, the control section 301 may control the transmission of DCI. To be more specific, in the control section 301, the same DCI format (format) may be used for initial transmission and retransmission, or different DCI formats may be used (see the first example, FIG. 4 and FIG. 5). Also, in the control section 301, the same DCI format (format) may be used when scheduling TBs and when scheduling CBGs, or different DCI formats may be used (see the second example, FIG. 6 and FIG. 7).

The control section 301 may also control the transmission of DCI containing a predetermined field value that indicates the cause of retransmission (see the third example, FIG. 8 and FIGs. 9). Alternatively, the control section 301 may use different DCI formats for a number of retransmitting CBGs that are retransmitted due to different causes (see the third example and FIGs. 10). Also, the control section 301 may schedule a number of retransmitting CBGs that are retransmitted due to different causes, at different timings (see the third example and FIGs. 11).

The control section 301 may also control the fallback from CB-based retransmission to TB-based retransmission (see the fourth example).

Furthermore, the control section 301 controls UL signal receiving processes (for example, demodulation, decoding, etc.). For example, the control section 301 demodulates UL signals based on the modulation scheme indicated by the MCS index designated in DCI (UL grant), and selects the TBS based on the TBS index indicated by the MCS index and the number of resource blocks to be allocated. The control section 301 determines the number of CBs and the size of each CB in the TB based on the selected TBS of the UL data.

Furthermore, the control section 301 may control retransmission per CBG (or per TB) based on retransmission control information that indicate an ACK or a NACK in response to each CBG (or each TB), from the user terminal 20.

The control section 301 can be constituted by a controller, a control circuit or control apparatus that can be described based on general understanding of the technical field to which the present invention pertains.

The transmission signal generation section 302 may generate a DL signal (including at least one of DL data, DCI, a DL reference signal and control information that is provided by way of higher layer signaling) based on commands from the control section 301, and output this signal to the mapping section 303.

The transmission signal generation section 302 can be constituted by a signal generator, a signal generating circuit or signal generating apparatus that can be described based on general understanding of the technical field to which the present invention pertains.

The mapping section 303 maps the DL signal generated in the transmission signal generation section 302 to a radio resource, as commanded from the control section 301, and outputs this to the transmitting/receiving sections 203. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding, etc.) for UL signals transmitted from the user terminal 20. For example, the received signal processing section 304 may perform the decoding process in units of CBs based on commands from the control section 301.

The received signal processing section 304 performs receiving processes (for example, demapping, demodulation, decoding, etc.) of UL signals transmitted from the user terminals 20 (including, for example, a UL data signal, a UL control signal, a UL reference signal, etc.). To be more specific, the received signal processing section 304 may output the received signals, the signals after the receiving processes and so on, to the measurement section 305. In addition, the received signal processing section 304 performs UCI receiving processes based on UL control channel configuration commanded from the control section 301.

Also, the measurement section 305 may measure the channel quality in UL based on, for example, the received power (for example, RSRP (Reference Signal Received Power)) and/or the received quality (for example, RSRQ (Reference Signal Received Quality)) of UL reference signals. The measurement results may be output to the control section 301.

### (User Terminal)

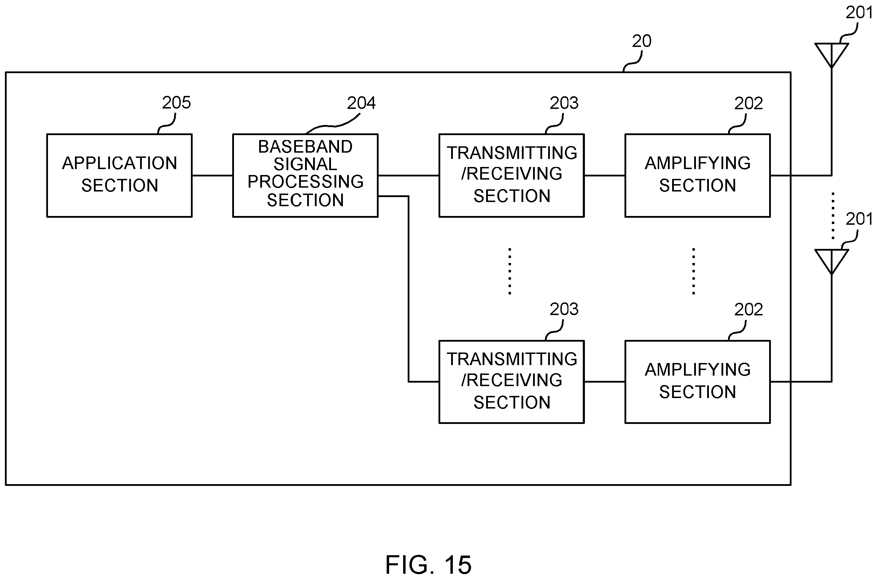

FIG. 15 is a diagram to show an exemplary overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in multiple transmitting/receiving antennas 201 are amplified in the amplifying sections 202. The transmitting/receiving sections 203 receive DL signals amplified in the amplifying sections 202. The received signals are subjected to frequency conversion and converted into the baseband signal in the transmitting/receiving sections 203, and output to the baseband signal processing section 204.

The baseband signal processing section 204 performs, for the baseband signal that is input, at least one of an FFT process, error correction decoding, a retransmission control receiving process and so on. The DL data is forwarded to the application section 205. The application section 205 performs processes related to higher layers above the physical layer and the MAC layer, and so on.

Meanwhile, UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving sections 203. UCI (including, for example, at least one of an A/N in response to a DL signal, channel state information (CSI) and a scheduling request (SR), and/or others) is also subjected to at least one of channel coding, rate matching, puncturing, a DFT process, an IFFT process and so on, and the result is forwarded to the transmitting/receiving sections 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

In addition, the transmitting/receiving section sections 203 receive DL signals (for example, at least one of DCI (DL assignment and/or UL grant), DL data and DL reference signals), and transmit UL signals (for example, at least one of UL data, UCI, and UL reference signals).

In addition, the transmitting/receiving sections 203 transmit retransmission control information related to DL signals. As to how often the retransmission control information is transmitted, for example, the retransmission control information may be transmitted per CB, per CBG, per TB or for every one or more TBs (that is, ACKs or NACKs may be indicated per CB, per CBG, per TB or for every one or more TBs). Also, the transmitting/receiving sections 203 may receive information about the configuration of the unit for retransmission (TB-based information or CBG-based information) of DL signals and/or UL signals.

A transmitting/receiving sections 203 can be constituted by a transmitter/receiver, a transmitting/receiving circuit or transmitting/receiving apparatus that can be described based on general understanding of the technical field to which the present invention pertains. Furthermore, a transmitting/receiving sections 203 may be structured as 1 transmitting/receiving section, or may be formed with a transmitting section and a receiving section.

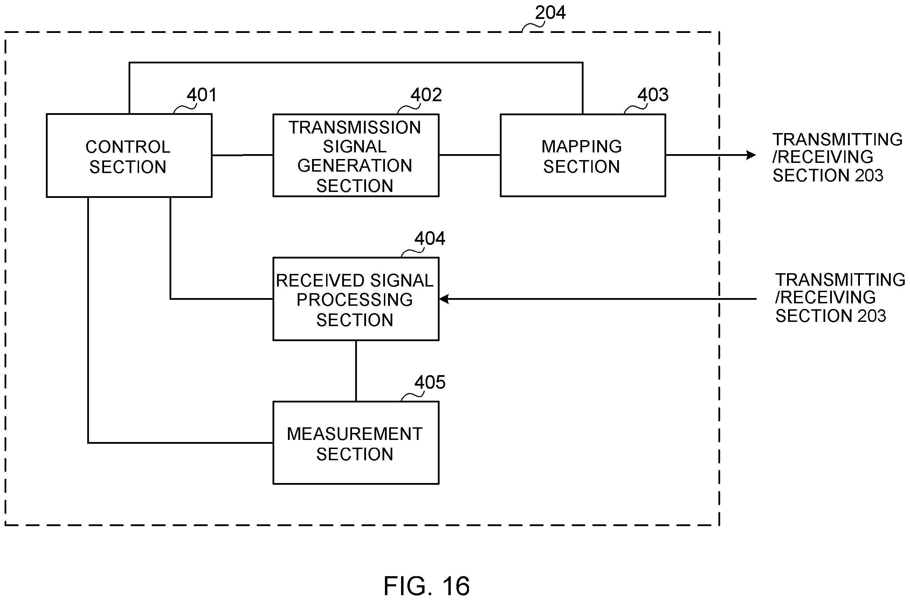

FIG. 16 is a diagram to show an exemplary functional structure of a user terminal according to the present embodiment. Note that, although FIG. 16 primarily shows functional blocks that pertain to characteristic parts of the present embodiment, the user terminal 20 has other functional blocks that are necessary for radio communication as well. As shown in FIG. 16, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, at least one of generation of UL signals in the transmission signal generation section 402, mapping of UL signals in the mapping section 403, the receiving process of DL signals in the received signal processing section 404 and measurements in the measurement section 405.

To be more specific, the control section 401 controls DL signal receiving processes (for example, demodulation, decoding, etc.) based on DCI (DL assignment). For example, the control section 401 may control the received signal processing section 404 to demodulate DL signals based on the modulation scheme indicated by the MCS index designated in DCI. Also, the control section 401 selects the TBS based on the TBS index indicated by the MCS index and the number of allocated resource blocks. The control section 401 determines the number of CBs and the size of each CB in the TB based on the selected TBS for DL data.

In addition, the control section 401 may monitor (blind-decode) prospective DL control channels (search spaces) and control the receipt of CBGs or TBs based on DCI that is detected. To be more specific, the control section 401 may assume the same DCI format (format) or different DCI formats for initial transmission and retransmission (see the first example, FIG. 4 and FIG. 5). Also, the control section 401 may assume the same DCI format (format) or different DCI formats when scheduling TBs and when scheduling CBGs (see the second example, FIG. 6 and FIG. 7).

Also, the control section 401 may control the decoding of retransmitting CBGs based on the cause of the CBGs' retransmission (also referred to as "cause of decoding failure" or "cause of CBG error") (see the third example). To be more specific, if puncturing by different transmission is the cause of CBG retransmission, the control section 401 may discard a CBG that is stored in the soft buffer. On the other hand, if puncturing by different transmission is not the cause of CBG retransmission (uncorrelated error), the control section 401 may synthesize the retransmitting CBG with a CBG that is stored in the soft buffer.

Alternatively, the control section 401 may determine the cause of retransmission based on the value of a predetermined field in DCI for scheduling retransmitting CBGs (see the third example, FIG. 8 and FIGs. 9). Alternatively, the control section 401 may determine the cause of retransmission of CBGs based on the DCI format that is used to schedule retransmitting CBGs (see the third example and FIGs. 10). Alternatively, the control section 401 may determine the cause of retransmission of CBGs based on the timing retransmitting CBGs are scheduled (see the third example and FIGs. 11).

The control section 401 may also control the fallback from CB-based retransmission to TB-based retransmission (see the fourth example). To be more specific, the control section 401 may recognize that retransmission is TB-based retransmission when a predetermined condition is satisfied.

Also, the control section 401 may control generation and/or transmission of retransmission control information related to DL data. To be more specific, the control section 401 may control generation and/or transmission of retransmission control information that indicates ACKs or NACKs per predetermined unit (for example, per CB or per CBG). To be more specific, the control section 401 may control generation of retransmission control information that indicates ACKs/NACKs for each CBG and/or TB based on the demodulation and/or decoding (error correction) result of each CB.

Also, the control section 401 may control restoration of TBs constituting DL signals. To be more specific, the control section 401 may control TBs to be restored based on CBs or CBGs that are initially transmitted, and/or retransmitted CBs/CBGs.

The control section 401 may also control receiving processes for retransmitting CBGs based on information related to retransmitting CBGs contained in DCI (DL assignment). For example, the control section 401 may control the process of combining data stored in the user terminal 20 (its soft buffer) and a retransmitting CBG based on the CBG index of the retransmitting CBG, included in DCI.

Also, the control section 401 controls the generation and transmission processes (for example, encoding, modulation, mapping etc.) of UL signals based on DCI (UL grant). For example, the control section 401 may control the transmission signal generation section 402 to modulate UL signals based on the modulation scheme that is indicated by the MCS index in DCI. Also, the control section 401 may control the transmission signal generation section 402 to select TBS based on the TBS index, which is indicated by the MCS index, and the number of resource blocks to allocate, and encode UL signals based on this TBS.

The control section 401 can be constituted by a controller, a control circuit or control apparatus that can be described based on general understanding of the technical field to which the present invention pertains.

The transmission signal generation section 402 generates retransmission control information for UL signals and DL signals as commanded from the control section 401 (including performing encoding, rate matching, puncturing, modulation and/or other processes), and outputs this to the mapping section 403. The transmission signal generation section 402 can be constituted by a signal generator, a signal generating circuit or signal generating apparatus that can be described based on general understanding of the technical field to which the present invention pertains.

The mapping section 403 maps the retransmission control information for UL signals and DL signals generated in the transmission signal generation section 402 to radio resources, as commanded from the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes for DL signals (for example, demapping, demodulation, decoding, etc.). For example, the received signal processing section 404 may perform the decoding process on a per CB basis as commanded from the control section 401, and output the decoding result of each CB to the control section 401.

The received signal processing section 404 outputs the information received from the radio base station 10, to the control section 401. The received signal processing section 404 outputs, for example, broadcast information, system information, higher layer control information by higher layer signaling such as RRC signaling, L1/L2 control information (for example, UL grant, DL assignment, etc.) and so on to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting 2 or more physically and/or logically separate pieces of apparatus (via wire and/or wireless, for example) and using these multiple pieces of apparatus.

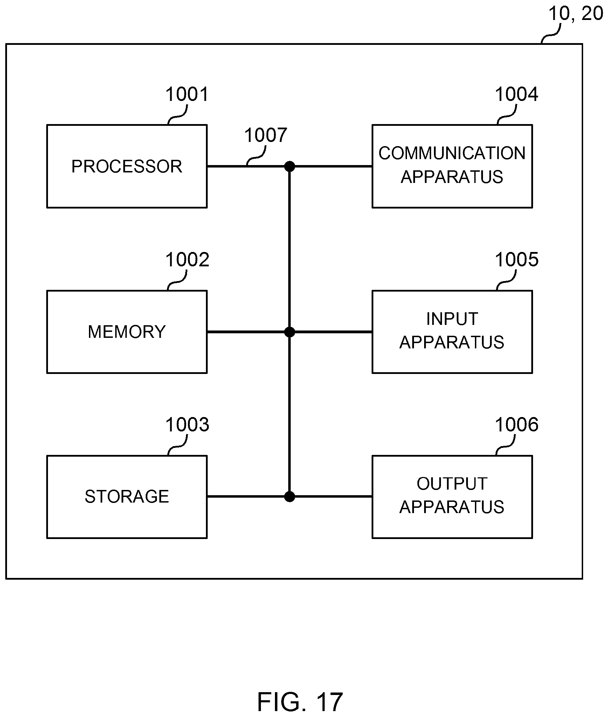

For example, the radio base station, user terminals and so on according to the present embodiment mode may function as a computer that executes the processes of the radio communication method of the present invention. FIG. 17 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read predetermined software (programs), thereby allowing the processor 1001 to do calculations, the communication apparatus 1004 to communicate, and the memory 1002 and the storage 1003 to read and write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and others may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Also, each device shown in FIG. 17 is connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. A subframe may be a fixed time length (for example, 1 ms) not dependent on the numerology.

A slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may be comprised of one or more symbols in the time domain.

A radio frame, a subframe, a slot, a minislot and a symbol all represent the time unit in signal communication. A radio frame, a subframe, a slot, a minislot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms.

Here, a TTI refers to the minimum time unit of scheduling in radio communication, for example. For example, in LTE systems, a radio base station schedules the radio resources (such as the frequency bandwidth and/or transmission power that can be used in each user terminal) to allocate to each user terminal in TTI units. Note that the definition of TTIs is not limited to this. The TTI may be the transmission time unit of channel-encoded data packets (transport blocks), code blocks and/or codewords, or may be the unit of processing in scheduling, link adaptation and so on. Note that, when 1 slot or 1 minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time length of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 minislot, 1 subframe or 1 TTI in length. 1 TTI and 1 subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, 1 RE may be a radio resource field of 1 subcarrier and 1 symbol.

Note that the structures of radio frames, subframes, slots, minislots, symbols and so on described above are merely examples. For example, configurations pertaining to the number of subframes included in a radio frame, the number of slots included in a subframe or a radio frame, the number of mini-slots included in a slot, the number of symbols included in a slot or a mini-slot, the number of subcarriers included in an RB, the number of symbols in a TTI, the duration of symbols, the duration of cyclic prefixes (CPs) and so on can be changed in a variety of ways.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by 1 bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may also be referred to as, for example, a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, "uplink" and/or "downlink" may be interpreted as "sides." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method of distinguishing between 2 or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between 2 or more elements, and may include the presence of one or more intermediate elements between 2 elements that are "connected" or "coupled" to each other. The coupling or connection between the elements may be physical, logical or a combination thereof. As used herein, 2 elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency fields, microwave regions and optical (both visible and invisible) regions.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

## Claims

1. A terminal (20) comprising:
a receiving section (203) adapted to receive downlink control information, DCI, including information about transmission of a code block group, CBG; and
a control section (401) adapted to control reception of the CBG based on the information about transmission of the CBG,
wherein a DCI format used in scheduling of a transport block for initial transmission is common with a DCI format used in scheduling of a CBG for retransmission,
the transport block for initial transmission includes the CBG for retransmission, and
wherein the control section (401) is adapted to determine which CBG is scheduled by using a search space to monitor the DCI.

2. A radio communication method for a terminal, comprising:
receiving downlink control information, DCI, including information about transmission of a code block group, CBG; and
controlling reception of the CBG based on the information about transmission of the CBG,
wherein a DCI format used in scheduling of a transport block for initial transmission is common with a DCI format used in scheduling of a CBG for retransmission,
the transport block for initial transmission includes the CBG for retransmission, and
wherein the radio communication method further comprises determining which CBG is scheduled by using a search space to monitor the DCI.

3. A base station (10) comprising:
a transmitting section (103) adapted to transmit downlink control information, DCI, including information about transmission of a code block group, CBG; and
a control section (301) adapted to control reception of HARQ-ACK for the CBG transmitted based on the information about transmission of the CBG,
wherein a DCI format used in scheduling of a transport block for initial transmission is common with a DCI format used in scheduling of a CBG for retransmission,
the transport block for initial transmission includes the CBG for retransmission, and
a search space for DCI monitoring is used to indicate which CBG is scheduled.

4. A system comprising a base station (10) and a terminal (20): wherein
the base station (10) comprises:
a transmitting section (103) adapted to transmit downlink control information, DCI, including information about transmission of a code block group, CBG; and
a control section (301) adapted to control reception of HARQ-ACK for the CBG transmitted based on the information about transmission of the CBG,
the terminal (20) comprises:
a receiving section (203) adapted to receive the DCI; and
a control section (401) adapted to control reception of the CBG based on the information,
wherein a DCI format used in scheduling of a transport block for initial transmission is common with a DCI format used in scheduling of a CBG for retransmission,
the transport block for initial transmission includes the CBG for retransmission, and
wherein the control section (401) is adapted to determine which CBG is scheduled by using a search space to monitor the DCI.

## Patentansprüche

1. Endgerät (20), umfassend:
einen Empfangsabschnitt (203), der so angepasst ist, dass er Abwärtsverbindungssteuerinformationen, DCI, empfängt, einschließlich Informationen über die Übertragung einer Codeblockgruppe, CBG; und
einen Steuerabschnitt (401), der so angepasst ist, dass er den Empfang der CBG auf der Grundlage der Informationen über die Übertragung der CBG steuert,
wobei ein DCI-Format, das bei der Planung eines Transportblocks für eine anfängliche Übertragung verwendet wird, mit einem DCI-Format gemeinsam ist, das bei der Planung einer CBG für eine erneute Übertragung verwendet wird,
wobei der Transportblock für die anfängliche Übertragung die CBG für die erneute Übertragung einschließt, und
wobei der Steuerabschnitt (401) so angepasst ist, dass er bestimmt, welche CBG geplant wird, indem ein Suchraum verwendet wird, um die DCI zu überwachen.

2. Funkkommunikationsverfahren für ein Endgerät, umfassend:
Empfangen von Abwärtsverbindungssteuerinformationen, DCI, einschließlich Informationen über die Übertragung einer Codeblockgruppe, CBG; und
Steuern des Empfangs der CBG auf der Grundlage der Informationen über die Übertragung der CBG,
wobei ein DCI-Format, das bei der Planung eines Transportblocks für eine anfängliche Übertragung verwendet wird, mit einem DCI-Format gemeinsam ist, das bei der Planung einer CBG für eine erneute Übertragung verwendet wird,
wobei der Transportblock für die anfängliche Übertragung die CBG für die erneute Übertragung einschließt, und
wobei das Funkkommunikationsverfahren weiter das Bestimmen umfasst, welche CBG geplant ist, indem ein Suchraum verwendet wird, um die DCI zu überwachen.

3. Basisstation (10), umfassend:
einen Übertragungsabschnitt (103), der so angepasst ist, dass er Abwärtsverbindungssteuerinformationen, DCI, übertragt, einschließlich Informationen über die Übertragung einer Codeblockgruppe, CBG; und
einen Steuerabschnitt (301), der so angepasst ist, dass er den Empfang von HARQ-ACK für die CBG steuert, die auf der Grundlage der Informationen über die Übertragung der CBG übertragen wird,
wobei ein DCI-Format, das bei der Planung eines Transportblocks für eine anfängliche Übertragung verwendet wird, mit einem DCI-Format gemeinsam ist, das bei der Planung einer CBG für eine erneute Übertragung verwendet wird,
wobei der Transportblock für die anfängliche Übertragung die CBG für die erneute Übertragung einschließt, und ein Suchraum für DCI-Überwachung verwendet wird, um anzuzeigen, welche CBG geplant ist.

4. System, das eine Basisstation (10) und ein Endgerät (20) umfasst: wobei die Basisstation (10) umfasst:
einen Übertragungsabschnitt (103), der so angepasst ist, dass er Abwärtsverbindungssteuerinformationen, DCI, übertragt, einschließlich Informationen über die Übertragung einer Codeblockgruppe, CBG; und
einen Steuerabschnitt (301), der so angepasst ist, dass er den Empfang von HARQ-ACK für die CBG steuert, die auf der Grundlage der Informationen über die Übertragung der CBG übertragen wird,
wobei das Endgerät (20) umfasst:
einen Empfangsabschnitt (203), der so angepasst ist, dass er die DCI empfängt; und
einen Steuerabschnitt (401), der so angepasst ist, dass er den Empfang der CBG auf der Grundlage der Informationen steuert,
wobei ein DCI-Format, das bei der Planung eines Transportblocks für eine anfängliche Übertragung verwendet wird, mit einem DCI-Format gemeinsam ist, das bei der Planung einer CBG für eine erneute Übertragung verwendet wird,
wobei der Transportblock für die anfängliche Übertragung die CBG für die erneute Übertragung einschließt, und
wobei der Steuerabschnitt (401) so angepasst ist, dass er bestimmt, welche CBG geplant wird, indem ein Suchraum verwendet wird, um die DCI zu überwachen.

## Revendications

1. Terminal (20) comprenant :
une section (203) de réception conçue pour recevoir des informations de commande de liaison descendante, DCI, incluant des informations d'émission d'un groupe de blocs de code, CBG ; et
une section (401) de commande conçue pour commander une réception du CBG sur la base des informations d'émission du CBG,
dans lequel un format DCI utilisé dans une programmation d'un bloc de transport pour une émission initiale est commun à un format DCI utilisé dans une programmation d'un CBG pour une réémission,
le bloc de transport pour une émission initiale inclut le CBG pour une réémission, et
dans lequel la section (401) de commande est conçue pour déterminer quel CBG est programmé en utilisant un espace de recherche pour surveiller le DCI.

2. Procédé de communication radio pour un terminal, comprenant :
la réception d'informations de commande de liaison descendante, DCI, incluant des informations d'émission d'un groupe de blocs de code, CBG ; et
la commande d'une réception du CBG sur la base des informations d'émission du CBG,
dans lequel un format DCI utilisé dans une programmation d'un bloc de transport pour une émission initiale est commun à un format DCI utilisé dans une programmation d'un CBG pour une réémission,
le bloc de transport pour une émission initiale inclut le CBG pour une réémission, et
dans lequel le procédé de communication radio comprend en outre le fait de déterminer quel CBG est programmé en utilisant un espace de recherche pour surveiller le DCI.

3. Station (10) de base comprenant :
une section (103) d'émission conçue pour émettre des informations de commande de liaison descendante, DCI, incluant des informations d'émission d'un groupe de blocs de code, CBG ; et
une section (301) de commande conçue pour commander une réception de HARQ-ACK pour le CBG émis sur la base des informations d'émission du CBG,
dans lequel un format DCI utilisé dans une programmation d'un bloc de transport pour une émission initiale est commun à un format DCI utilisé dans une programmation d'un CBG pour une réémission,
le bloc de transport pour une émission initiale inclut le CBG pour une réémission, et un espace de recherche pour une surveillance de DCI est utilisé pour indiquer quel CBG est programmé.

4. Système comprenant une station (10) de base et un terminal (20) : dans lequel la station (10) de base comprend :
une section (103) d'émission conçue pour émettre des informations de commande de liaison descendante, DCI, incluant des informations d'émission d'un groupe de blocs de code, CBG ; et
une section (301) de commande conçue pour commander une réception de HARQ-ACK pour le CBG émis sur la base des informations d'émission du CBG,
le terminal (20) comprend :
une section (203) de réception conçue pour recevoir le DCI ; et
une section (401) de commande conçue pour commander une réception du CBG sur la base des informations,
dans lequel un format DCI utilisé dans une programmation d'un bloc de transport pour une émission initiale est commun à un format DCI utilisé dans une programmation d'un CBG pour une réémission,
le bloc de transport pour une émission initiale inclut le CBG pour une réémission, et
dans lequel la section (401) de commande est conçue pour déterminer quel CBG est programmé en utilisant un espace de recherche pour surveiller le DCI.
